# EUROPÄISCHE PATENTSCHRIFT

(11) **EP 1 242 272 B1**
(45) Veröffentlichungstag und Bekanntmachung des Hinweises auf die Patenterteilung: **23.04.2003**
(21) Anmeldenummer: 00993702.0
(22) Anmeldetag: 20.12.2000
(51) Int. Cl.: B60S 3/04

(54) **FAHRZEUGWASCHANLAGE**
VEHICLE CLEANING SYSTEM
INSTALLATION DE LAVAGE POUR VEHICULES

(30) Priorität: 29.12.1999 DE 19963742
(43) Veröffentlichungstag der Anmeldung: 25.09.2002
(73) Patentinhaber: Alfred Kärcher GmbH & Co., 71364 Winnenden (DE)
(72) Erfinder: HEINZE, Michael, 71282 Hemmingen (DE); BERGER, Oliver, 71672 Marbach (DE)
(74) Vertreter: Karrais, Martin
(86) Internationale Anmeldenummer: EP0012999
(87) Internationale Veröffentlichungsnummer: WO01049538

(56) Entgegenhaltungen:
- AU-A- 5 874 086
- DE-A- 3 723 978
- PATENT ABSTRACTS OF JAPAN vol. 014, no. 196 (M-0964), 20. April 1990 (1990-04-20) -& JP 02 038170 A (MICHIBAI BOEKI KK), 7. Februar 1990 (1990-02-07)

## Beschreibung

Die Erfindung betrifft eine Fahrzeugwaschanlage mit mindestens einer in Längsrichtung und in Querrichtung eines zu reinigenden Fahrzeugs an diesem vorbeibewegbaren Düsenanordnung, die zur Reinigung des Fahrzeugs mit einer Reinigungsflüssigkeit beaufschlagbar ist.

Eine derartige Waschanlage ist aus dem dokument DE 37 23 978 A bekannt.

Die Reinigung eines Fahrzeugs in einer Fahrzeugwaschanlage kann üblicherweise entweder mittels Reinigungsbürsten durchgeführt werden, die während der Reinigung die Fahrzeugoberfläche zur Entfernung von Schmutz berühren, oder aber die Reinigung erfolgt berührungslos, indem eine Reinigungsflüssigkeit unter Hochdruck auf das Fahrzeug gespritzt oder gesprüht wird. Für das zuletzt genannte Reinigungsverfahren kommen üblicherweise eine Vielzahl von Düsenanordnungen zum Einsatz, die vertikal und horizontal ausgerichtet sind und das zu reinigende Fahrzeug in der Art eines Portals umgeben. Dies ermöglicht es, die Düsenanordnungen starr auszugestalten und trotzdem sämtliche zu reinigenden Flächen des Fahrzeugs mit einem Hochdruckstrahl zu beaufschlagen.

In der DE 37 23 978 A1 wird statt des Einsatzes starr ausgebildeter Düsenanordnungen eine um das zu reinigende Fahrzeug herum verfahrbare vertikale Düsenanordnung vorgeschlagen, die um eine vertikale Achse drehbar ist, so daß sowohl bei einer Bewegung in Längsrichtung des Fahrzeugs als auch bei einer Bewegung in Querrichtung jeweils ein Hochdruckstrahl auf das Fahrzeug gerichtet werden kann. Durch eine derartige Ausgestaltung einer Fahrzeugwaschanlage kann zwar die Anzahl der Düsenanordnungen vermindert werden, die erforderliche Drehbarkeit der Düsenanordnung um eine vertikale Achse macht allerdings eine konstruktiv aufwendige Mechanik erforderlich mit einer Vielzahl sich bewegender Teile. Dies ist mit nicht unbeträchtlichen Herstellungskosten verbunden und hat eine Störungsanfälligkeit der Fahrzeugwaschanlage zur Folge.

Aufgabe der vorliegenden Erfindung ist es, eine Fahrzeugwaschanlage der eingangs genannten Art derart weiterzubilden, daß sie eine konstruktiv einfachere und störungsunempfindlichere Ausgestaltung aufweist.

Diese Aufgabe wird bei einer gattungsgemäßen Fahrzeugwaschanlage erfindungsgemäß dadurch gelöst, daß die Düsenanordnung zumindest zwei Düsengruppen umfaßt, wobei eine erste Düsengruppe während einer Querbewegung und eine zweite Düsengruppe während einer Längsbewegung der Düsenanordnung dem zu reinigenden Fahrzeug zugewandt ist. Durch den Einsatz von mindestens zwei in unterschiedliche Richtungen ausgerichteten Düsengruppen kann eine Mechanik zur Drehung der Düsenanordnung um eine vertikale Achse entfallen. Es ist lediglich erforderlich, während einer Bewegung der Düsenanordnung quer zum zu reinigenden Fahrzeug die erste Düsengruppe mit einer Reinigungsflüssigkeit zu beaufschlagen, so daß bei einer Querbewegung mittels der ersten Düsengruppe eine Reinigungsflüssigkeit auf den Front- oder Heckbereich des Fahrzeugs aufgesprüht oder aufgespritzt werden kann, und während einer Bewegung in Längsrichtung des Fahrzeugs wird die zweite Düsengruppe mit einer Reinigungsflüssigkeit beaufschlagt, so daß auch bei einer Bewegung der Düsenanordnung entlang einer Fahrzeuglängsseite das Fahrzeug mit Reinigungsflüssigkeit besprüht oder bespritzt werden kann.

Um das Fahrzeug entlang seiner beiden Längsseiten und auch im Front- und Heckbereich zuverlässig zu reinigen, kann erfindungsgemäß der Einsatz zweier Düsenanordnungen vorgesehen sein, die jeweils in Quer- und in Längsrichtung bewegbar sind und jeweils zwei in unterschiedliche Richtungen ausgerichtete Düsengruppen umfassen. Dies ermöglicht es, beispielsweise den Frontbereich sowie eine Längsseite des Fahrzeugs mit den beiden Düsengruppen einer ersten Düsenanordnung zu reinigen, und der Heckbereich und die andere Längsseite des Fahrzeugs kann zur Reinigung mit den beiden Düsengruppen der zweiten Düsenanordnung mit einer Reinigungsflüssigkeit besprüht oder bespritzt werden.

Bei einer besonders bevorzugten Ausgestaltung der erfindungsgemäßen Fahrzeugwaschanlage ist vorgesehen, daß die Düsenanordnung drei Düsengruppen umfaßt, wobei eine erste Düsengruppe während einer Querbewegung vor dem zu reinigenden Fahrzeug, eine zweite Düsengruppe während einer Längsbewegung entlang einer Fahrzeuglängsseite und eine dritte Düsengruppe während einer Querbewegung hinter dem zu reinigenden Fahrzeug dem Fahrzeug zugewandt ist. Bei einer derartigen Ausgestaltung ist es lediglich erforderlich, eine einzige Düsenanordnung sowohl in Quer- als auch in Längsrichtung bewegbar auszugestalten. Mit einer einzigen derart ausgebildeten Düsenanordnung können zusätzlich zu einer Fahrzeuglängsseite sowohl der Frontbereich als auch der Heckbereich zuverlässig gereinigt werden. Hierzu kann mittels der ersten Düsengruppe der Frontbereich des Fahrzeugs mit Reinigungsflüssigkeit besprüht oder bespritzt werden, anschließend wird mittels der zweiten Düsengruppe der Düsenanordnung eine Fahrzeuglängsseite mit Reinigungsflüssigkeit beaufschlagt, und dann kann mittels der dritten Düsengruppe der Düsenanordnung auch der Heckbereich des Fahrzeugs zuverlässig gereinigt werden. Für die Reinigung der verbleibenden, zweiten Fahrzeuglängsseite kann dann eine zusätzliche, lediglich in Längsrichtung bewegbare Düsenanordnung zum Einsatz kommen.

Selbstverständlich kann auch vorgesehen sein, zwei jeweils in Quer- und in Längsrichtung verfahrbare Düsenanordnungen mit jeweils drei Düsengruppen einzusetzen, wobei jeweils beispielsweise ungefähr die Hälfte des Front- und des Heckbereichs sowie zusätzlich jeweils eine Längsseite des Fahrzeugs von einer Düsenanordnung mit Reinigungsflüssigkeit beaufschlagt wird. Hierbei ist es besonders günstig, wenn sich die Bewegungsbereiche der beiden Düsenanordnungen bei ihrer Querbewegung gegenseitig überlappen, um auf diese Weise zuverlässig auch im Front- und Heckbereich ein besonders gutes Reinigungsergebnis zu erzielen.

Alternativ kann auch vorgesehen sein, mittels einer einzigen Düsenanordnung sowohl den Front- und Heckbereich des Fahrzeugs als auch beide Fahrzeuglängsseiten mit Reinigungsflüssigkeit zu besprühen oder zu bespritzen, indem die Düsenanordnung insgesamt vier Düsengruppen umfaßt, so daß ohne Drehung der Düsenanordnung um eine vertikale Achse jede Längs- und Querseite des Fahrzeugs mittels einer Düsengruppe mit Reinigungsflüssigkeit beaufschlagt werden kann.

Besonders günstig ist es, wenn die Düsenanordnung in einem vorgebbaren Abstand zum Fahrzeug bewegbar ist. Dies ermöglicht es, die Düsenanordnung jeweils in einem derartigen Abstand zur jeweils zu reinigenden Längsoder Querseite des Fahrzeugs anzuordnen, daß ein optimales Reinigungsergebnis bei der Beaufschlagung des Fahrzeugs mit Reinigungsflüssigkeit erzielbar ist. Hierbei fließt der Gedanke mit ein, daß bei der Reinigung mittels Hochdruckstrahlen ein zu großer Abstand der Düsenanordnung vom Fahrzeug eine beträchtliche Verschlechterung des Reinigungsergebnisses zur Folge hat und daß bei einem zu geringen Abstand die Gefahr einer Beschädigung des Fahrzeugs aufgrund einer Kollision mit der Düsenanordnung besteht. Eine derartige Kollisionsgefahr ist insbesondere im Bereich vorspringender Fahrzeugteile, beispielsweise Rückspiegel, zu beachten.

Um die Düsenanordnung in einem vorgebbaren Abstand zum Fahrzeug zu positionieren hat es sich als vorteilhaft erwiesen, wenn der Düsenanordnung eine Sensoreinheit zugeordnet ist, beispielsweise in Form einer Lichtschranke. Letztere kann zum Beispiel als Reflextaster mit einstellbarer Hintergrundausblendung ausgebildet sein.

Günstig ist es, wenn die Düsenanordnung und die Sensoreinheit an einer in Querrichtung bewegbaren Transporteinheit, vorzugsweise einem Laufwagen, gehalten sind. Hierbei ist es besonders vorteilhaft, wenn an der Transporteinheit zusätzlich eine der Düsenanordnung zugeordnete Antriebseinheit gehalten ist zur Bewegung der Düsenanordnung in Querrichtung. Eine derartige Ausgestaltung läßt sich besonders kompakt ausführen, wobei mechanisch aufwendige und störungsanfällige Seilzugverbindungen entfallen können, indem der Düsenanordnung zur Bewegung in Querrichtung eine eigene Antriebseinheit, beispielsweise ein Elektromotor, zugeordnet ist. Letzterer kann zusammen mit der Sensoreinheit und der Düsenanordnung an der Transporteinheit gehalten sein. Dadurch ergibt sich ein modulartiger Aufbau der Fahrzeugwaschanlage, wodurch die Montage beträchtlich vereinfacht wird.

Um sicherzustellen, daß mittels der Sensoreinheit die Düsenanordnung jeweils in einem vorgebbaren Abstand zum Fahrzeug positionierbar ist, kann die Sensoreinheit im Abstand zur Düsenanordnung an der Transporteinheit gehalten sein und beim Ertasten der Fahrzeugoberfläche ein Stopsignal für die Antriebseinheit erzeugen, so daß sichergestellt wird, daß die Düsenanordnung nur bis zu einem minimalen vorgebbaren Abstand an das Fahrzeug heranbewegbar ist. Hierbei ist es günstig, wenn die Fahrzeugwaschanlage zusätzlich eine Speicher- und Steuervorrichtung umfaßt, so daß die bei einem vollständigen Bewegungsablauf der Düsenanordnung in Quer- und Längsrichtung des Fahrzeugs mittels der Sensoreinheit erfaßte Außenkontur des Fahrzeugs für nachfolgende Reinigungsvorgänge gespeichert werden kann. Aus den gespeicherten Werten kann ein entsprechendes Fahrprogramm für die Düsenanordnung abgeleitet werden, so daß bei einem zweiten Bewegungsdurchlauf der Düsenanordnung ein Erfassen des Fahrzeugs mittels der Sensoreinheit entfallen kann. Derartige Speicher- und Steuervorrichtungen sind dem Fachmann ohne weiteres bekannt und müssen hier nicht im einzelnen beschrieben werden. Es kann auch vorgesehen sein, die Sensoreinheit bei einem zweiten Durchlauf der Düsenanordnung zur Kontrolle der Fahrzeugposition einzusetzen, so daß gegebenenfalls eine Änderung der Fahrzeugposition zuverlässig erkannt wird. Dadurch läßt sich die Gefahr einer Fahrzeugbeschädigung vermindern, selbst wenn der im Fahrzeug verbleibende Fahrer irrtümlich während der Reinigung die Fahrzeugstellung ändert.

Bei einer bevorzugten Ausgestaltung ist vorgesehen, daß der Düsenanordnung eine Sensoranordnung zugeordnet ist zum Erfassen des Heckendes des Fahrzeugs. Mittels einer derartigen Sensoranordnung kann auf einfache Weise sichergestellt werden, daß die Düsenanordnung bei der Reinigung unterschiedlich langer Fahrzeuge im Heckbereich jeweils einen optimalen Abstand zum Fahrzeug einnimmt.

Hierbei ist es besonders vorteilhaft, wenn die Sensoranordnung eine schräg zur Horizontalen ausgerichtete Lichtschranke umfaßt, d.h. Lichtsender und Lichtempfänger sind vorzugsweise auf unterschiedlicher Höhe angeordnet, so daß mittels des schräg ausgerichteten Lichtstrahls das Heckende des Fahrzeugs unabhängig vom Fahrzeugaufbau sicher erkannt werden kann.

Vorzugsweise ist die Sensoranordnung zum Erfassen des Heckendes des Fahrzeugs hinter der Düsenanordnung positioniert, bezogen auf die Bewegungsrichtung der Düsenanordnung entlang einer Fahrzeuglängsseite in Richtung auf das Fahrzeugheck. Dies hat den Vorteil, daß ohne zusätzliche Maßnahmen sichergestellt werden kann, daß die Düsenanordnung einen definierten Abstand zum Fahrzeugheck einnimmt, wenn mittels der Sensoranordnung das Fahrzeugheck erfaßt wird.

Von Vorteil ist es, wenn der Düsenanordnung eine Transporteinrichtung zugeordnet ist zur Bewegung der Düsenanordnung in Längsrichtung des Fahrzeugs. Die Transporteinrichtung kann beispielsweise in Form eines längs einer Fahrbahn, beispielsweise einer Fahrschiene, verfahrbaren Transportwagens ausgestaltet sein, wobei die Transporteinrichtung bevorzugt einen eigenen Antrieb, beispielsweise einen Elektromotor, aufweist. Der Antrieb der Transporteinrichtung kann in Abhängigkeit von einem Signal der Sensoranordnung zum Erfassen des Heckendes des Fahrzeugs angesteuert werden.

Eine erfindungsgemäße Fahrzeugwaschanlage mit einem konstruktiv besonders einfachen Aufbau kann dadurch erzielt werden, daß die Fahrzeugwaschanlage zu beiden Seiten des Fahrzeugs jeweils eine vorzugsweise oberhalb des Fahrzeugs angeordnete Transporteinrichtung aufweist, wobei die beiden Transporteinrichtungen synchron in Längsrichtung bewegbar sind und wobei die beiden Transporteinrichtungen über eine Quertraverse miteinander verbunden sind, an der die Düsenanordnung verschiebbar gelagert ist. Eine derartige Fahrzeugwaschanlage kann in kurzer Zeit montiert werden. Hierzu ist es lediglich erforderlich, zunächst die beiden Transporteinrichtungen in Längsrichtung des Fahrzeugs verfahrbar zu lagern, beispielsweise auf jeweils einer Fahrschiene. Anschließend werden die beiden Transporteinrichtungen mittels der Quertraverse miteinander verbunden, die ihrerseits beispielsweise einen Laufwagen aufnehmen kann, an dem die in Quer- und in Längsrichtung verfahrbare Düsenanordnung gehalten ist.

Wie bereits erläutert, ist es besonders günstig, wenn die Fahrzeugwaschanlage zusätzlich zu der sowohl in Quer- als auch in Längsrichtung bewegbaren Düsenanordnung eine weitere Düsenanordnung umfaßt, die längs des Fahrzeugs bewegbar ist und eine dem Fahrzeug zugewandte Düsengruppe aufweist. Diese zusätzliche Düsenanordnung ist vorzugsweise an einer der beiden Transporteinrichtungen gehalten und kann somit von dieser in Längsrichtung des Fahrzeugs bewegt werden.

Von Vorteil ist es, wenn mindestens eine Düsenanordnung an einem Düsentragarm gehalten ist. Der Düsentragarm kann hierbei zusätzliche Auftragungsmittel aufnehmen zum Auftragen von Schaum und/oder einer Reinigungschemikalie auf das zu reinigende Fahrzeug. So kann beispielsweise vorgesehen sein, daß zumindest an einem Düsentragarm die Auftragungsmittel mehrere in unterschiedliche Richtungen ausgerichtete Sprühdüsen umfassen, mit deren Hilfe das Fahrzeug mit Schaum und/oder einer Reinigungschemikalie besprüht werden kann. Zur Reinigung kann das Fahrzeug beispielsweise zuerst mit einer Reinigungschemikalie besprüht werden, anschließend kann Schaum aufgetragen werden, um danach Reinigungsflüssigkeit unter Hochdruck auf das Fahrzeug zu sprühen oder zu spritzen, um auf diese Weise ein besonders gutes Reinigungsergebnis zu erzielen.

Zusätzlich können Mittel zum Auftragen von Wachs auf das Fahrzeug vorgesehen sein. Diese Mittel sind vorzugsweise an einer Transporteinrichtung gehalten, die längs des Fahrzeugs bewegbar ist.

Bei einer vorteilhaften Ausgestaltung ist vorgesehen, daß die Fahrzeugwaschanlage zum Trocknen des Fahrzeugs ein Gebläse aufweist sowie einen mit dem Gebläse in Strömungsverbindung stehenden, sich in Richtung auf das Fahrzeug öffnenden Strömungskanal. Hierbei ist es zur Erzielung einer konstruktiv vereinfachten Konstruktion vorteilhaft, wenn zumindest eine Düsenanordnung am Strömungskanal gehalten ist. Bei einem derartigen Aufbau können zusätzliche Düsentragarme entfallen, denn die Funktion der Halterung der Düsenanordnungen wird von den Strömungskanälen übernommen.

Hierbei ist es von Vorteil, wenn ein auf das Fahrzeug gerichteter Mündungsbereich des Strömungskanals in einem vorgebbaren Abstand zum Fahrzeug bewegbar ist. Dies ermöglicht es, den Mündungsbereich entsprechend der Fahrzeugkontor zu verfahren, so daß das Fahrzeug zum einen mittels der am Strömungskanal gehaltenen Düsenanordnung dem Verlauf der Fahrzeugkontur folgend gewaschen und zum anderen mittels des mit dem Strömungskanal in Verbindung stehenden Gebläses getrocknet werden kann. Bei einer konstruktiv besonders einfachen Ausgestaltung ist in diesem Zusammenhang vorgesehen, daß das Gebläse zusammen mit dem Strömungskanal an der quer zum Fahrzeug bewegbaren Transporteinheit gehalten ist.

Um zusätzlich zu den Fahrzeuglängsseiten und dem Frontund Heckbereich auch das Dach sowie die Motorhaube des Fahrzeugs gründlich reinigen zu können, ist bei einer bevorzugten Ausgestaltung der erfindungsgemäßen Fahrzeugwaschanlage vorgesehen, daß diese einen quer zum Fahrzeug ausgerichteten, höhenverstellbaren Düsenbalken umfaßt. Diesem ist vorzugsweise eine Sensoranordnung zugeordnet zum Bewegen des Düsenbalkens in einem vorgebbaren Abstand zum Fahrzeug. Hierbei ist es günstig, wenn der Düsenbalken an den beiden Transporteinrichtungen höhenverstellbar gehalten ist.

Die nachfolgende Beschreibung einer bevorzugten Ausführungsform der Erfindung dient im Zusammenhang mit der Zeichnung der näheren Erläuterung. Es zeigen:
- Figur 1:: eine schaubildliche Ansicht einer Fahrzeugwaschanlage;

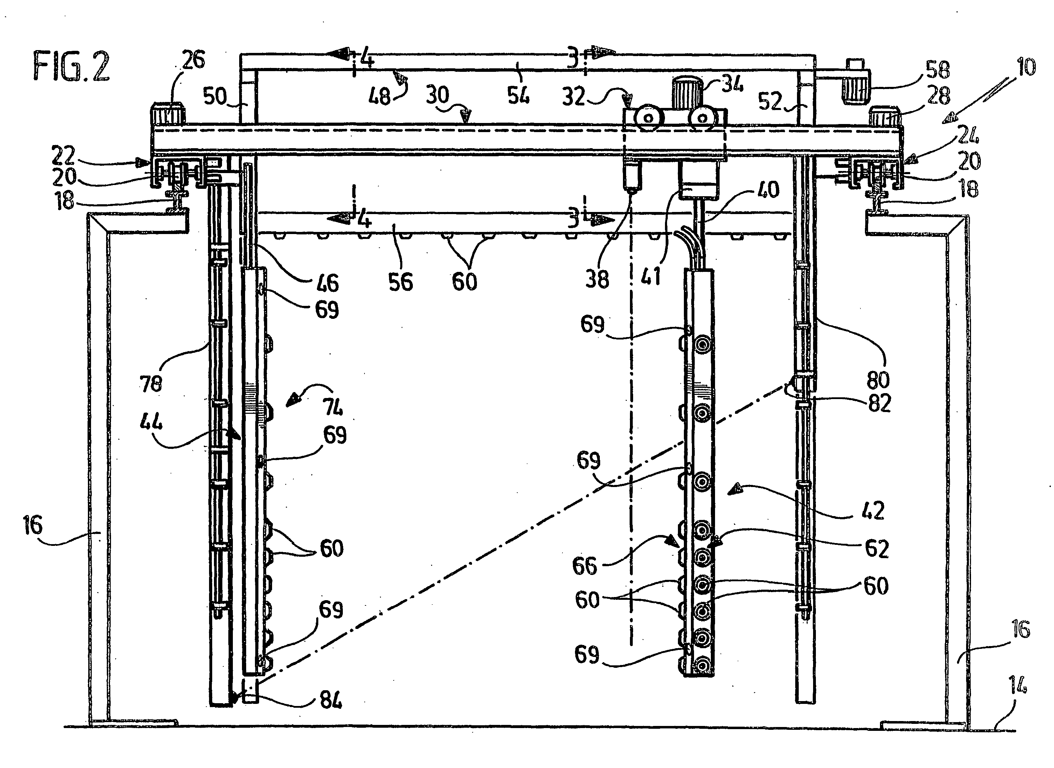

- Figur 2:: eine Ansicht der Fahrzeugwaschanlage in Richtung des Pfeils A aus Figur 1;

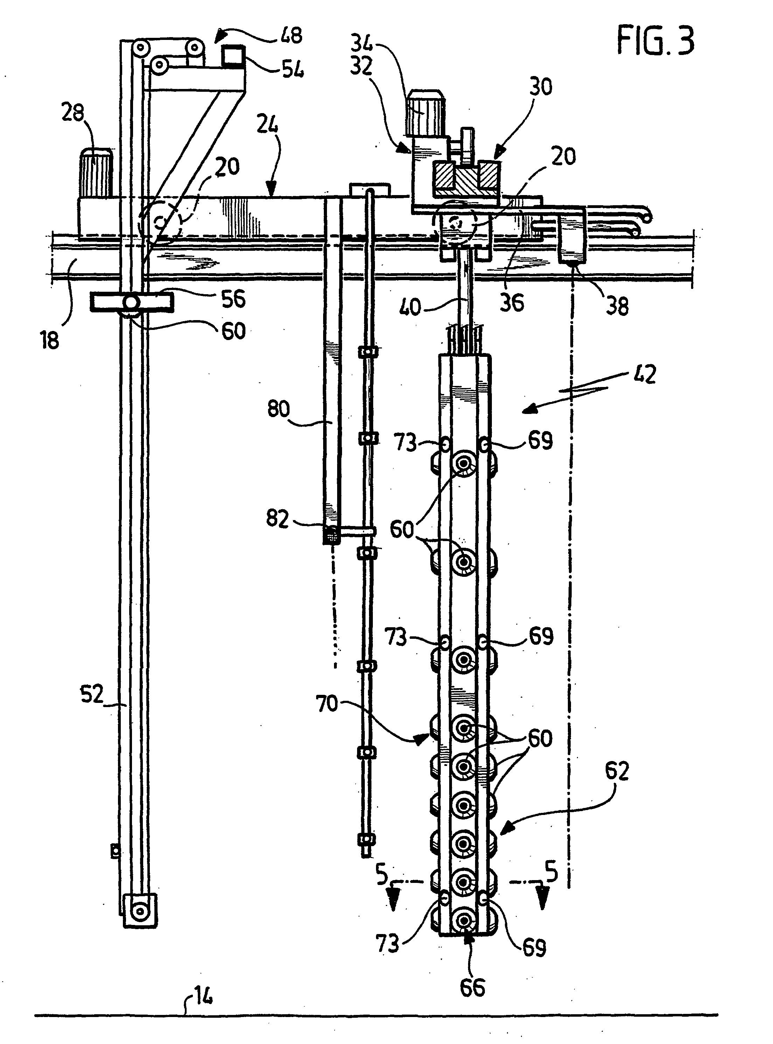

- Figur 3:: eine Ansicht längs der Linie 3-3 in Figur 2;

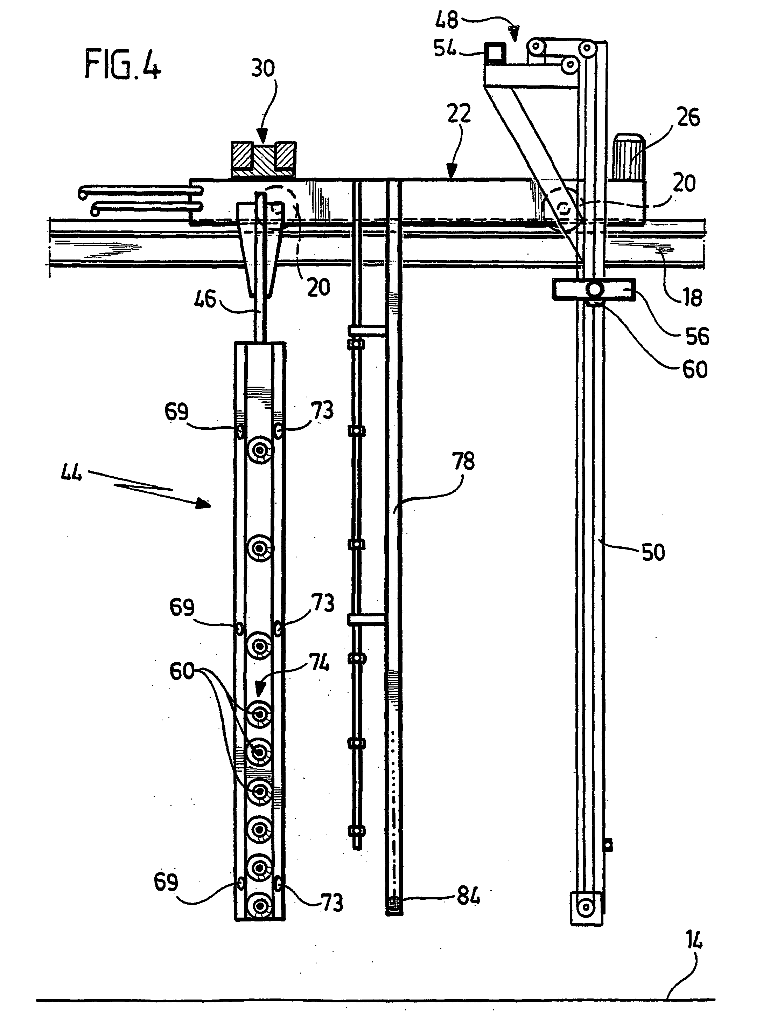

- Figur 4:: eine Ansicht längs der Linie 4-4 in Figur 2;
- Figur 5:: eine Schnittansicht einer Düsenanordnung längs der Linie 5-5 in Figur 3;
- Figur 6:: eine Schnittansicht entsprechend Figur 5 einer alternativen Ausgestaltung einer Düsenanordnung und
- Figur 7:: eine Veranschaulichung des Verfahrwegs einer bei der Fahrzeugwaschanlage zum Einsatz kommenden, in Quer- und in Längsrichtung des Fahrzeugs bewegbaren Düsenanordnung.

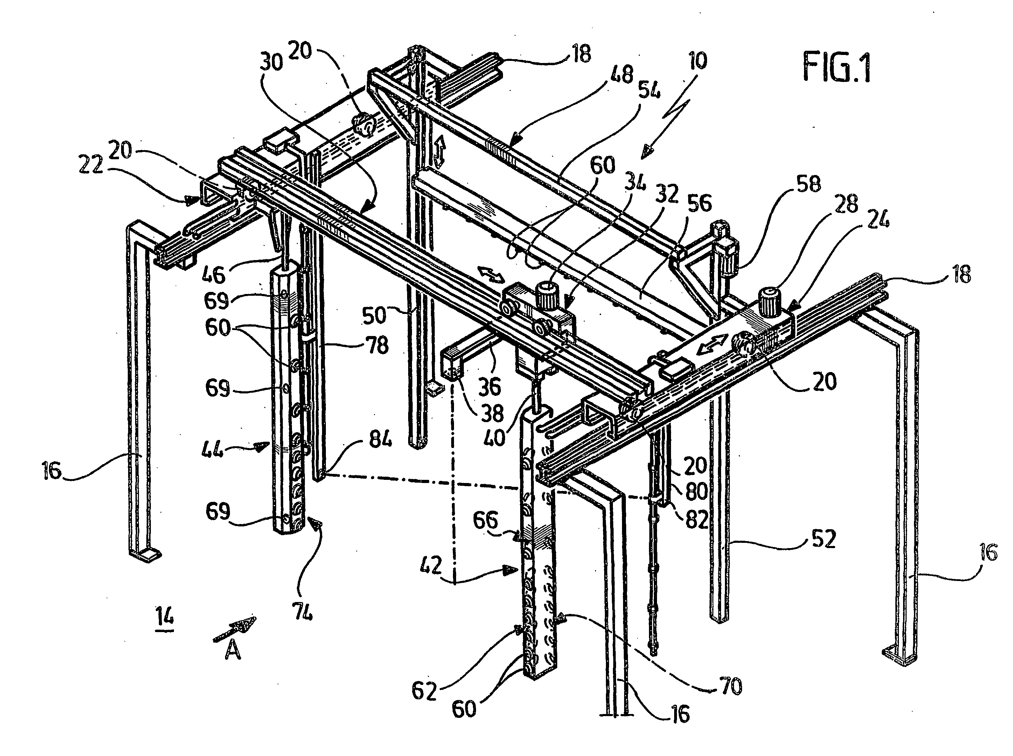

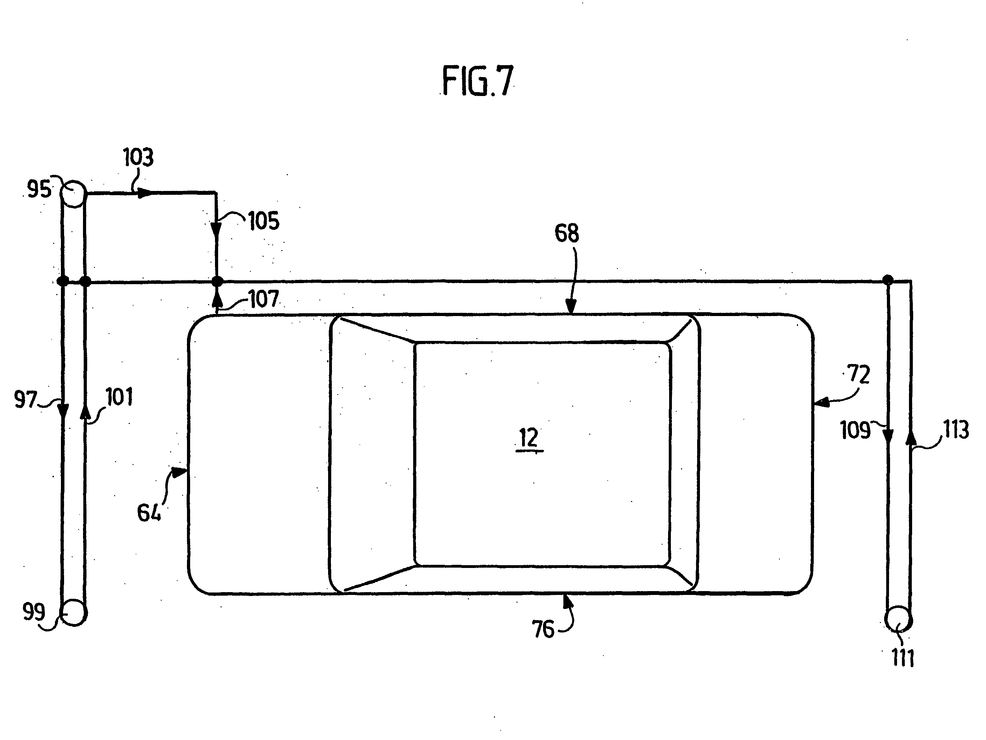

In der Zeichnung ist schematisch eine insgesamt mit dem Bezugszeichen 10 belegte Fahrzeugwaschanlage dargestellt zur Reinigung eines in Figur 7 skizzierten Kraftfahrzeugs 12, das auf einer Fahrbahn 14 abgestellt ist, nachdem es in Richtung des Pfeils A in Figur 1 in einen Waschbereich der Fahrzeugwaschanlage 10 eingefahren wurde.

Wie insbesondere aus Figur 1 deutlich wird, sind zu beiden Seiten der Fahrbahn 14 senkrechte Stützen 16 angeordnet, die an ihrem oberen Ende oberhalb des Kraftfahrzeugs 12 längs der Fahrbahn 14 verlaufende Schienen 18 tragen, deren Länge größer gewählt ist als die Länge der zu reinigenden Kraftfahrzeuge 12.

Auf jeder Schiene 18 ist jeweils mittels Transporträder 20 ein Transportwagen 22 bzw. 24 verfahrbar gehalten, die längs der Schienen 18 verschiebbar sind. Die Verschiebbarkeit wird mittels jeweils eines Elektroantriebs 26 bzw. 28 erzielt, der am jeweiligen Transportwagen 22, 24 gehalten ist. Die beiden Elektroantriebe 26, 28 können mittels einer an sich bekannten, in der Zeichnung nicht dargestellten Steuervorrichtung synchron angesteuert werden. Alternativ könnte die Verschiebbarkeit der Transportwagen 22, 24 mittels eines Seilantriebs erzielt werden. Derartige Seilantriebe sind dem Fachmann bekannt und deshalb in der Zeichnung nicht dargestellt.

Die beiden Transportwagen 22, 24 sind über eine Quertraverse 30 miteinander verbunden, an der quer zur Längsrichtung des Fahrzeugs 12 ein Laufwagen 32 verfahrbar gelagert ist. Zu seinem Antrieb trägt der Laufwagen 32 einen Elektromotor 34, und an seinem dem Transportwagen 22 zugewandten Endbereich ist ein entgegen der Richtung des Pfeils A in Figur 1 vom Transportwagen 32 abstehender Ausleger 36 angeordnet, der an seinem freien Ende einen als Reflextaster ausgebildeten Sensor 38 trägt.

Im Abstand zum Ausleger 36 ist im Bereich seines dem Transportwagen 24 zugewandten Endes am Laufwagen 32 ein Düsentragarm 40 hängend gehalten, der eine Düsenanordnung 42 trägt, die mittels des Laufwagens 32 in Querrichtung und mittels der Transportwagen 22 und 24 zusätzlich in Längsrichtung des zu reinigenden Fahrzeugs 12 verfahrbar ist. Die Halterung des Düsentragarms 40 am Laufwagen 32 erfolgt über ein elastisches Element, im dargestellten Ausführungsbeispiel in Form eines Gummipuffers 41. Dies hat den Vorteil, daß der Düsentragarm 40 bei einem ungewollten Kontakt der Fahrzeugoberfläche elastisch ausweichen kann, so daß eine Beschädigung gering gehalten wird.

Eine weitere Düsenanordnung 44 ist an einem mit dem Transportwagen 22 starr verbundenen Düsentragarm 46 gehalten. Diese Düsenanordnung 44 kann mittels des Transportwagens 22 in Längsrichtung des Fahrzeugs 12 verfahren werden, eine Verfahrbarkeit in Querrichtung ist für diese Düsenanordnung 44 jedoch nicht vorgesehen. Auch für die Halterung des Düsentragarms 46 kann statt einer starren Fixierung am Transportwagen 22 ein elastisches Element, beispielsweise ein Gummipuffer, zum Einsatz kommen.

Zusätzlich zur Quertraverse 30 nehmen die beiden Transportwagen 22 und 24 ein Trägerportal 48 zwischen sich auf mit zwei vertikal ausgerichteten Führungsbalken 50, 52 und einem Querbalken 54, über den die beiden Führungsbalken 50, 52 miteinander verbunden sind. An den Führungsbalken 50, 52 ist ein horizontal ausgerichteter Düsenbalken 56 in vertikaler Richtung verfahrbar gelagert, wobei zu dessen Antrieb ein Motor 58 am oberen Ende des Führungsbalkens 52 angeordnet ist. Der Fahrbahn 14 zugewandt trägt der Düsenbalken 56 auf seiner Unterseite mehrere, im Abstand zueinander angeordnete Hochdruckdüsen 60, die in an sich bekannter und deshalb in der Zeichnung nicht dargestellter Weise mit einer Reinigungsflüssigkeit beaufschlagbar sind, um das Dach des Kraftfahrzeugs 12 und dessen Motorhaube mit der Reinigungsflüssigkeit zu besprühen oder zu bespritzen. Dem Düsenbalken 56 ist eine an sich bekannte und deshalb in der Zeichnung nicht dargestellte Sensoranordnung zugeordnet, so daß der Düsenbalken 56 in einem vorgebbaren Abstand zum Fahrzeug 12 positionierbar ist.

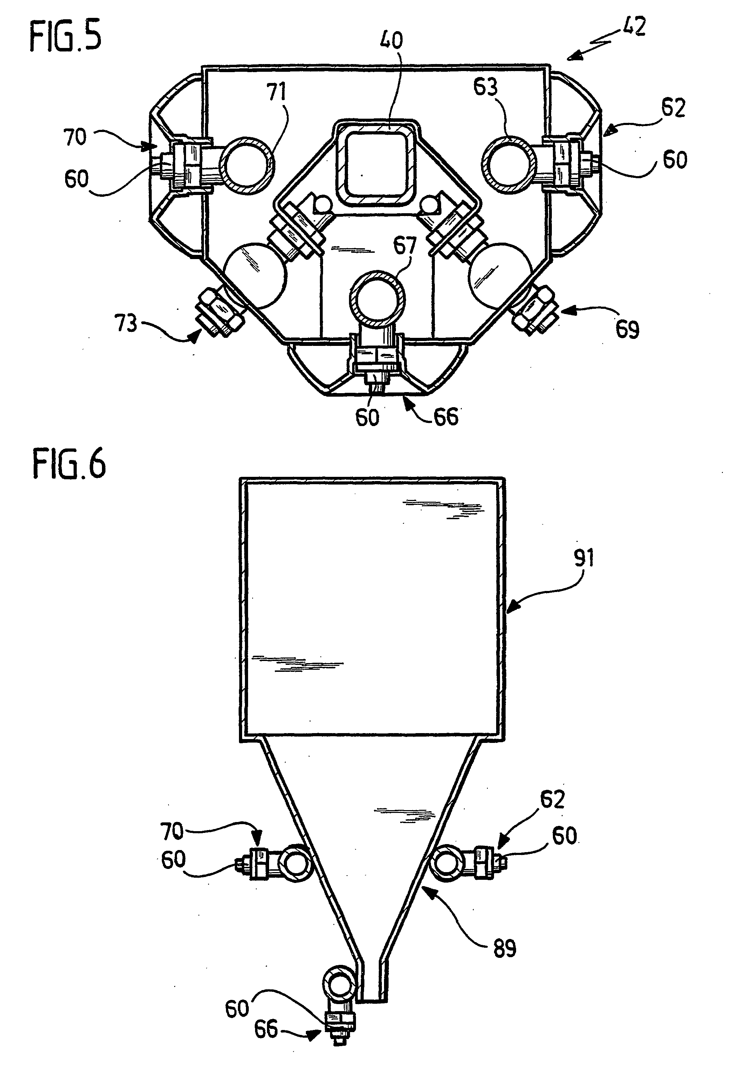

Weitere Hochdruckdüsen 60 sind für die Düsenanordnungen 42 und 44 vorgesehen. Wie insbesondere aus Figur 5 deutlich wird, umfaßt die in Quer- und in Längsrichtung bewegbare Düsenanordnung 42 insgesamt drei Gruppen von in vertikaler Richtung aufgereihten Hochdruckdüsen 60, wobei eine erste Düsengruppe 62 entgegen der Richtung des Pfeils A in Figur 1 in Längsrichtung des Fahrzeugs 12 ausgerichtet ist, so daß mittels dieser ersten Düsengruppe 62 ein Frontbereich 64 des Kraftfahrzeugs 14 bei einer Querbewegung der Düsenanordnung 42 mit Reinigungsflüssigkeit besprüht oder bespritzt werden kann. Eine zweite Düsengruppe 66 mit in vertikaler Richtung aufgereihten Hochdruckdüsen 60 ist um 90° versetzt zur ersten Düsengruppe 62 angeordnet, so daß mittels der zweiten Düsengruppe eine Längsseite 68 des Kraftfahrzeugs 12 mit Reinigungsflüssigkeit besprüht oder bespritzt werden kann. Und eine dritte Düsengruppe 70 der Düsenanordnung 42 ist um 180° zur ersten Düsengruppe 62 versetzt angeordnet und ermöglicht es, einen Heckbereich 72 des Kraftfahrzeugs 12 bei einer weiteren Querbewegung der Düsenanordnung 42 mit Reinigungsflüssigkeit zu besprühen oder zu bespritzen. Die ersten, zweiten und dritten Düsengruppen 62, 66 bzw. 70 umfassen jeweils eine Vielzahl von Hochdruckdüsen 60, deren gegenseitiger Abstand sich in Richtung auf das untere, freie Ende der Düsenanordnung 42 verringert. Auf diese Weise wird sichergestellt, daß das zu reinigende Fahrzeug insbesondere in seinem der Fahrbahn 14 benachbarten, in der Regel besonders stark verschmutzten Bereich mit einer großen Menge an Reinigungsflüssigkeit besprüht oder bespritzt werden kann.

Die Hochdruckdüsen 60 der ersten, zweiten und dritten Düsengruppen 62, 66 bzw. 70 der Düsenanordnung 42 sind jeweils über eine Versorgungsleitung 63, 67 bzw. 71 miteinander verbunden, über die die jeweiligen Hochdruckdüsen 60 der einzelnen Düsengruppen wahlweise mit Reinigungsflüssigkeit beaufschlagbar sind.

In Umfangsrichtung zwischen der ersten und der zweiten Düsengruppe 62 bzw. 66 sowie zwischen der zweiten und dritten Düsengruppe 66 bzw. 70 sind am Düsentragarm 40 zwei in einem Winkel von 90° zueinander angeordnete Reihen von Sprühdüsen 69 und 73 gehalten, mit denen zur Vorreinigung eine Reinigungschemikalie auf das Kraftfahrzeug 12 aufgesprüht werden kann. Dies wird insbesondere aus Figur 5 deutlich. Entsprechende Sprühdüsen 69, 73 sind am Düsentragarm 46 gehalten.

Im Gegensatz zur Düsenanordnung 42 ist an der Düsenanordnung 44 nur eine einzige Düsengruppe 74 vorgesehen mit mehreren in vertikaler Richtung aufgereihten Hochdruckdüsen 60, die quer zur Längsrichtung der Fahrbahn 14 einer Längsseite 76 des Kraftfahrzeugs 12 zugewandt ausgerichtet sind.

Zwischen der Quertraverse 30 und dem Trägerportal 48 ist an den Transportwagen 22 und 24 jeweils ein in Richtung auf die Fahrbahn 14 nach unten abstehender Halter 78 bzw. 80 fixiert. Hierbei weist der am Transportwagen 22 angeordnete Halter 78 eine größere Länge auf als der am Transportwagen 24 angeordnete Halter 80. Am freien Ende des Halters 80 ist ein Lichtsender 82 positioniert, der einen Lichtstrahl in Richtung auf einen am freien Ende des Halters 78 angeordneten Lichtempfänger 84 richtet. Der Lichtsender 82 bildet somit in Kombination mit dem Lichtempfänger 84 eine schräg zur Horizontale ausgerichtete Lichtschranke.

Bei der in Figur 5 dargestellten Ausführungsform der Düsenanordnung 42 kommt zur Halterung der ersten, zweiten und dritten Düsengruppen 62, 66 bzw. 70 der Düsentragarm 40 zum Einsatz. Wie aus Figur 6 deutlich wird, kann alternativ auch vorgesehen sein, die ersten, zweiten und dritten Düsengruppen 62, 66 bzw. 70 an einem trichterförmigen Mündungsbereich 89 eines Strömungskanals 91 zu fixieren, der mit einem in der Zeichnung nicht dargestellten, an sich bekannten Gebläse in Strömungsverbindung steht, um das Fahrzeug 12 am Ende des Reinigungsvorgang mit Trocknungsluft zu beaufschlagen.

Der Strömungskanal 91 kann hierbei entsprechend der Anordnung des Düsentragarms 40 am Laufwagen 32 fixiert werden, der vorzugsweise zusätzlich ein Gebläse zur Trocknung des Fahrzeugs trägt. Mittels des Gebläses und der am Strömungskanal 91 gehaltenen Hochdruckdüsen 60 kann somit sowohl die Reinigung als auch die Trocknung dem Verlauf der Fahrzeugkontur folgend durchgeführt werden, ohne daß für die Positionierung des Strömungskanals zusätzliche Sensoren erforderlich sind. Ein weiteres Gebläse kann am Transportwagen 22 fixiert werden, das ebenfalls mit einem Strömungskanal in Verbindung steht, der entsprechend dem Düsentragarm 46 am Transportwagen 22 gehalten ist und in seinem Mündungsbereich eine einzige Düsengruppe entsprechend der Düsengruppe 74 trägt.

Entsprechend der Halterung der Düsengruppen 62, 66 und 70 bzw. 74 kann auch für den Dachbalken 56 eine Ausgestaltung in Form eines Strömungskanals vorgesehen sein, der mit einem Gebläse in Strömungsverbindung steht und in seinem Mündungsbereich zusätzlich Hochdruckdüsen trägt, mit denen eine Reinigungsflüssigkeit auf das Dach, die Windschutzscheibe und die Motorhaube des Fahrzeugs 12 gesprüht oder gespritzt werden kann. Auch die Trocknung und Reinigung dieser Fahrzeugbereiche kann somit konturgeführt erfolgen.

Für den Dachbalken 56 kann vorgesehen sein, daß er zwei schräg zueinander ausgerichtete Gruppen von Hochdruckdüsen 60 trägt, die in Fahrzeuglängsrichtung schräg nach vorne bzw. schräg nach hinten gerichtet sind (nicht dargestellt). Wird der Dachbalken 56 dann über das Fahrzeug geführt, so kann wahlweise eine der beiden Hochdruckdüsengruppen mit Reinigungsflüssigkeit versorgt werden.

Zur Reinigung des Fahrzeugs 12 wird dieses in einem vorgegebenen Abstand zu einer in Figur 7 veranschaulichten Startposition 95 der Düsenanordnung 42 positioniert. Der Abstand kann beispielsweise 30 cm betragen. Nach dem Starten eines Waschprogramms wird dann im dargestellten Ausführungsbeispiel zunächst eine Vorreinigung des Fahrzeugs durchgeführt. Hierzu bewegt sich die in Quer- und in Längsrichtung verfahrbare Düsenanordnung 42 zunächst quer zum Fahrzeug 12 in Richtung des in Figur 7 dargestellten Pfeils 97 entlang der Fahrzeugfront 64, bis sie einen der Startposition 95 gegenüberliegenden, das Erreichen einer Endposition signalisierenden Näherungs- oder Berührungsschalter 99 erreicht, und anschließend wird die Düsenanordnung 42 in Richtung des Pfeils 101 längs der Quertraverse 30 zurück in die Anfangsposition 95 verfahren.

In einem nächsten Verfahrensschritt wird die Düsenanordnung 42 gemeinsam mit der Düsenanordnung 44 eine definierte Wegstrecke von beispielsweise 30 cm parallel zur Längsseite 68 des Kraftfahrzeugs 12 in Richtung auf dieses bewegt, indem die beiden Transportwagen 22, 24 längs der Schienen 18 verfahren werden. Daraufhin erfolgt mittels des Laufwagens 32 eine erneute Querbewegung der Düsenanordnung 42 in Richtung des Pfeils 105, bis der am Ausleger 36 gehaltene Sensor 38 das Erreichen der Längsseite 68 des Kraftfahrzeugs 12 signalisiert. Dies hat dann zur Folge, daß mittels der in der Zeichnung nicht dargestellten Steuerung der Laufwagen 32 wieder so weit zurück in Richtung des Pfeils 107 verfahren wird, bis der als Lichttaster ausgebildete Sensor 38 wieder frei ist, wobei dann aufgrund der gewählten Länge des Auslegers 36 sichergestellt ist, daß die Düsenanordnung 42 einen vorgegebenen Abstand zur Fahrzeuglängsseite 68 einnimmt. Danach werden beide Düsenanordnungen 42 und 44 mittels der Transportwagen 22 bzw. 24 entlang der Fahrzeuglängsseiten so weit verfahren, bis die Lichtschranke in Form des Lichtsenders 82 und des Lichtempfängers 84 das Erreichen des Fahrzeughecks 72 signalisiert. Wird während dieser Längsfahrt aufgrund vorspringender Fahrzeugteile (nicht dargestellt) der Lichttaster (Sensor 38) belegt, so wird der Abstand der Düsenanordnung 42 zum Fahrzeug 12 selbsttätig so weit vergrößert, bis der Lichttaster (Sensor 38) wieder frei ist. Von Vorteil ist es, wenn die Bewegung der Düsenanordnung 42 dann für eine vorzugsweise vorgebbare Wegstrecke von beispielsweise 10 cm in dem vergrößerten Abstand zum Fahrzeug erfolgt, um dann erneut eine Querbewegung durchzuführen entsprechend der Pfeile 105 und 107. Auf diese Weise kann festgestellt werden, ob es sich bei dem vorspringenden Fahrzeugteil um ein bezogen auf die Fahrzeuglängsrichtung kurzes Teil, beispielsweise um einen Rückspiegel, handelt, so daß die Düsenanordnung 42 nach dessen Überwindung wieder in Richtung auf das Fahrzeug zugestellt werden kann, oder ob sich die Fahrzeugkontur insgesamt verbreitert hat. Auf diese Weise wird eine Kollision der Düsenanordnung 42 mit dem Fahrzeug 12 zuverlässig verhindert, wobei jedoch ein optimaler Abstand der Düsenanordnung 42 zum Fahrzeug 12 gewährleistet ist.

Die Längsfahrt der Düsenanordnungen 42 und 44 wird bei Erfassen des Fahrzeughecks gestoppt und der Elektromotor 34 wird dann zum Verfahren der Düsenanordnung 42 längs der Quertraverse 30 erneut aktiviert, so daß die Düsenanordnung 42 entlang des Fahrzeughecks 72 in Richtung des Pfeils 109 quer zum Kraftfahrzeug 12 verfahren werden kann, bis durch die Aktivierung eines Näherungsschalters 111 das Erreichen einer Endposition signalisiert wird und die Düsenanordnung 42 anschließend entlang des Fahrzeughecks 72 in Richtung des Pfeils 113 wieder zur Seite verfahren wird. Aufgrund des gewählten Abstands zwischen der das Fahrzeugheck erfassenden Lichtschranke 82, 84 und der Düsenanordnung 42 ist gewährleistet, daß die Düsenanordnung 42 bei ihrer Querbewegung hinter dem Fahrzeug 12 einen vorgebbaren Abstand zum Fahrzeug 12 einnimmt.

Nach erfolgter Hin- und Herbewegung der Düsenanordnung 42 im Heckbereich des Fahrzeugs werden die beiden Transportwagen 22 und 24 entlang der Fahrzeuglängsseiten zurück in ihre ursprüngliche Position verfahren, so daß die Düsenanordnung 42 ausgehend von ihrer Startposition 95, deren Erreichen ebenfalls durch einen Näherungsschalter signalisiert werden kann, eine erneute Waschfahrt durchführen kann. Die Fahrzeugwaschanlage 10 umfaßt zusätzlich eine an sich bekannte und deshalb in der Zeichnung nicht dargestellte Speichervorrichtung, mit der der Verfahrweg der Düsenanordnung 42 gespeichert werden kann, so daß diese anschließend für einen weiteren Waschvorgang entsprechend dem ersten Verfahrweg positioniert werden kann, ohne daß hierzu die beschriebenen Sensoren zum Einsatz kommen müssen.

Da die Düsenanordnung 42 drei unterschiedliche Düsengruppen prägt, die alternativ mit Reinigungsflüssigkeit beaufschlagt werden können, kann für die Querbewegung in Höhe der Fahrzeugfront 64, für die anschließende Längsbewegung entlang der Fahrzeuglängsseite 68 und für die Querbewegung in Höhe des Fahrzeughecks 72 jeweils eine separate Gruppe von Hochdruckdüsen 60 zum Einsatz kommen, mit deren Hilfe die jeweilige Fahrzeugoberfläche mit Reinigungsflüssigkeit besprüht oder bespritzt werden kann. Während der Fahrt entlang der Fahrzeuglängsseite 68 kommt zum Besprühen oder Bespritzen der der Fahrzeuglängsseite 68 gegenüberliegenden Fahrzeuglängsseite 76 zusätzlich die Düsengruppe 74 der Düsenanordnung 44 zum Einsatz. Die Fahrzeugwaschanlage 10 ermöglicht somit eine zuverlässige Reinigung des Kraftfahrzeugs 12, wobei insbesondere unterschiedlich breite und unterschiedlich lange Kraftfahrzeuge 12 in einem jeweils optimalen Abstand zur Fahrzeugoberfläche mit Reinigungsflüssigkeit bespritzt oder besprüht werden können.

## Patentansprüche

1. Fahrzeugwaschanlage (10) mit mindestens einer in Längsund in Querrichtung eines zu reinigenden Fahrzeugs (12) an diesem vorbeibewegbaren Düsenanordnung (42), die zur Reinigung des Fahrzeugs (12) mit Reinigungsflüssigkeit beaufschlagbar ist, **dadurch gekennzeichnet, daß** die Düsenanordnung (42) zumindest zwei Düsengruppen (62, 66, 70) umfaßt, wobei eine erste Düsengruppe (62) während einer Querbewegung und eine zweite Düsengruppe (60) während einer Längsbewegung der Düsenanordnung (42) dem zu reinigenden Fahrzeug (12) zugewandt ist.

2. Fahrzeugwaschanlage nach Anspruch 1, **dadurch gekennzeichnet, daß** die Düsenanordnung (42) drei Düsengruppen (62, 66, 70) umfaßt, wobei eine erste Düsengruppe (62) während einer Querbewegung vor dem zu reinigenden Fahrzeug (12), eine zweite Düsengruppe (66) während einer Längsbewegung entlang einer Fahrzeuglängsseite (68) und eine dritte Düsengruppe (70) während einer Querbewegung hinter dem zu reinigenden Fahrzeug (12) dem Fahrzeug (12) zugewandt ist.

3. Fahrzeugwaschanlage nach Anspruch 1 oder 2, **dadurch gekennzeichnet, daß** die Düsenanordnung (42) in einem vorgebbaren Abstand zum Fahrzeug (12) bewegbar ist.

4. Fahrzeugwaschanlage nach einem der voranstehenden Ansprüche, **dadurch gekennzeichnet, daß** der Düsenanordnung (42) eine Sensoreinheit (38) zugeordnet ist zur Steuerung der Düsenanordnung (42) während einer Längsbewegung.

5. Fahrzeugwaschanlage nach Anspruch 4, **dadurch gekennzeichnet, daß** die Düsenanordnung (42) und die Sensoreinheit (38) an einer in Querrichtung bewegbaren Transporteinheit (32) gehalten sind.

6. Fahrzeugwaschanlage nach Anspruch 5, **dadurch gekennzeichnet, daß** der Düsenanordnung (42) eine an der Transporteinheit (32) angeordnete Antriebseinheit (34) zugeordnet ist zur Bewegung der Düsenanordnung (42) in Querrichtung.

7. Fahrzeugwaschanlage nach einem der voranstehenden Ansprüche, **dadurch gekennzeichnet, daß** der Düsenanordnung (42) eine Sensoranordnung (82, 84) zugeordnet ist zum Erfassen des Heckendes (72) des Fahrzeugs (12).

8. Fahrzeugwaschanlage nach Anspruch 7, **dadurch gekennzeichnet, daß** die Sensoranordnung (82, 84) eine schräg zur Horizontale ausgerichtete Lichtschranke umfaßt.

9. Fahrzeugwaschanlage nach einem der voranstehenden Ansprüche, **dadurch gekennzeichnet, daß** der Düsenanordnung (42) eine Transporteinrichtung (24) zugeordnet ist zur Bewegung der Düsenanordnung (42) in Längsrichtung.

10. Fahrzeugwaschanlage nach einem der voranstehenden Ansprüche, **dadurch gekennzeichnet, daß** die Fahrzeugwaschanlage (10) zu beiden Seiten des Fahrzeugs (12) jeweils eine Transporteinrichtung (22 bzw. 24) aufweist, wobei die beiden Transporteinrichtungen (22, 24) synchron in Längsrichtung bewegbar und über eine Quertraverse (30) miteinander verbunden sind, an der die Düsenanordnung (42) verschiebbar gelagert ist.

11. Fahrzeugwaschanlage nach einem der voranstehenden Ansprüche, **dadurch gekennzeichnet, daß** die Fahrzeugwaschanlage (10) eine weitere Düsenanordnung (44) umfaßt, die längs des Fahrzeugs (12) bewegbar ist und eine dem Fahrzeug (12) zugewandte Düsengruppe (74) aufweist.

12. Fahrzeugwaschanlage nach einem der voranstehenden Ansprüche, **dadurch gekennzeichnet, daß** mindestens eine Düsenanordnung (42, 44) an einem Düsentragarm (40 bzw. 46) gehalten ist.

13. Fahrzeugwaschanlage nach Anspruch 12, **dadurch gekennzeichnet, daß** zumindest an einem Düsentragarm (40, 46) zusätzliche Auftragungsmittel (69, 73) gehalten sind zum Auftragen von Schaum und/oder einer Reinigungschemikalie auf das zu reinigende Fahrzeug (12).

14. Fahrzeugwaschanlage nach Anspruch 13, **dadurch gekennzeichnet, daß** zumindest an einem Düsentragarm (40, 46) die Auftragungsmittel mehrere, in unterschiedliche Richtungen ausgerichtete Sprühdüsen (69, 73) umfassen.

15. Fahrzeugwaschanlage nach einem der voranstehenden Ansprüche, **dadurch gekennzeichnet, daß** die Fahrzeugwaschanlage (10) zum Trocknen des Fahrzeugs (12) ein Gebläse aufweist sowie einen mit dem Gebläse gekoppelten, sich in Richtung auf das Fahrzeug öffnenden Strömungskanal (91), und daß eine Düsenanordnung (42, 44) an dem Strömungskanal (91) gehalten ist.

16. Fahrzeugwaschanlage nach Anspruch 15, **dadurch gekennzeichnet, daß** zumindest ein Mündungsbereich (89) des Strömungskanals (91) in einem vorgebbaren Abstand zum Fahrzeug (12) bewegbar ist.

17. Fahrzeugwaschanlage nach Anspruch 16, **dadurch gekennzeichnet, daß** der Strömungskanal (91) an der in Querrichtung bewegbaren Transporteinheit (32) gehalten ist.

18. Fahrzeugwaschanlage nach Anspruch 17, **dadurch gekennzeichnet, daß** das Gebläse an der Transporteinheit (32) gehalten ist.

19. Fahrzeugwaschanlage nach einem der voranstehenden Ansprüche, **dadurch gekennzeichnet, daß** die Fahrzeugwaschanlage (10) einen quer zum Fahrzeug (12) ausgerichteten, höhenverstellbaren Düsenbalken (56) umfaßt.

20. Fahrzeugwaschanlage nach Anspruch 19, **dadurch gekennzeichnet, daß** dem Düsenbalken (56) eine Sensoranordnung zugeordnet ist zum Bewegen des Düsenbalkens (56) in einem vorgebbaren Abstand zum Fahrzeug (12).

21. Fahrzeugwaschanlage nach Anspruch 19 oder 20 in Verbindung mit Anspruch 10, **dadurch gekennzeichnet, daß** der Düsenbalken (56) an den beiden Transporteinrichtungen (22, 24) höhenverstellbar gehalten ist.

## Claims

1. A vehicle wash installation (10) with at least one nozzle arrangement (42) movable past a vehicle (12) to be cleaned in a longitudinal and in a transverse direction thereto, the nozzle arrangement being suppliable with cleaning fluid for cleaning the vehicle (12), **characterised in that** the nozzle arrangement (42) comprises at least two nozzle groups (62, 66, 70), a first nozzle group (62) being turned towards the vehicle (12) to be cleaned during a transverse movement of the nozzle arrangement (42), and a second nozzle group (60) being turned towards the vehicle (12) to be cleaned during a longitudinal movement of the nozzle arrangement (42).

2. A vehicle wash installation according to Claim 1, **characterised in that** the nozzle arrangement (42) comprises three nozzle groups (62, 66, 70), a first nozzle group (62) being turned towards the vehicle (12) to be cleaned during a transverse movement in front of the vehicle (12), a second nozzle group (66) being turned towards the vehicle (12) to be cleaned during a longitudinal movement along a long side (68) of the vehicle, and a third nozzle group (70) being turned towards the vehicle (12) to be cleaned during a transverse movement behind the vehicle (12).

3. A vehicle wash installation according to Claim 1 or 2, **characterised in that** the nozzle arrangement (42) is movable at a pre-selectable distance from the vehicle (12).

4. A vehicle wash installation according to one of the preceding claims, **characterised in that** a sensor unit (38) is associated with the nozzle arrangement (42) for the purpose of steering the nozzle arrangement (42) during a longitudinal movement.

5. A vehicle wash installation according to Claim 4, **characterised in that** nozzle arrangement (42) and the sensor unit (38) are held on a transversely movable transporting unit (32).

6. A vehicle wash installation according to Claim 5, **characterised in that** a drive unit (34) mounted on the transporting unit (32) is associated with the nozzle arrangement (42) for moving the nozzle arrangement (42) in a transverse direction.

7. A vehicle wash installation according to one of the preceding claims, **characterised in that** a sensor arrangement (82, 84) is associated with the nozzle arrangement (42) for detecting the rear end (72) of the vehicle (12).

8. A vehicle wash installation according to Claim 7, **characterised in that** the sensor arrangement (82, 84) comprises a light barrier aligned obliquely to the horizontal.

9. A vehicle wash installation according to one of the preceding claims, **characterised in that** a transporting device (24) is associated with the nozzle arrangement (42) for moving the nozzle arrangement (42) in a longitudinal direction.

10. A vehicle wash installation according to one of the preceding claims, **characterised in that** the vehicle wash installation (10) has a transporting device (22 and 24 respectively) on each of the two sides of the vehicle (12), the two transporting devices (22, 24) being synchronously movable in a longitudinal direction and connected to one another via a transverse cross-member (30) on which the nozzle arrangement (42) is displaceably mounted.

11. A vehicle wash installation according to one of the preceding claims, **characterised in that** the vehicle wash installation (10) comprises a further nozzle arrangement (44) which is movable along the vehicle (12) and has a nozzle group (74) turned towards the vehicle (12).

12. A vehicle wash installation according to one of the preceding claims, **characterised in that** at least one nozzle arrangement (42, 44) is held on a nozzle-bearing arm (40 and 46 respectively).

13. A vehicle wash installation according to Claim 12, **characterised in that** additional application means (69, 73) are held on at least one nozzle-bearing arm (40, 46) for applying foam and/or a cleaning chemical to the vehicle (12) to be cleaned.

14. A vehicle wash installation according to Claim 13, **characterised in that** the application means on at least one nozzle-bearing arm (40, 46) comprise a plurality of spray nozzles (69, 73) aligned in different directions.

15. A vehicle wash installation according to one of the preceding claims, **characterised in that**, for the purpose of drying the vehicle (12), the vehicle wash installation (10) has a fan and a flow duct (91 ) linked to the fan and opening in a direction towards the vehicle, and **in that** a nozzle arrangement (42, 44) is held on the flow duct (91).

16. A vehicle wash installation according to Claim 15, **characterised in that** at least one outlet region (89) of the flow duct (91) is movable at a pre-selectable distance from the vehicle (12).

17. A vehicle wash installation according to Claim 16, **characterised in that** the flow duct (91) is held on the transversely movable transporting unit (32).

18. A vehicle wash installation according to Claim 17, **characterised in that** the fan is held on the transporting unit (32).

19. A vehicle wash installation according to one of the preceding claims, **characterised in that** the vehicle wash installation (10) comprises a height-adjustable bank of nozzles (56) aligned transversely to the vehicle (12).

20. A vehicle wash installation according to Claim 19, **characterised in that** a sensor arrangement is associated with the nozzle bank (56) for the purpose of moving the nozzle bank (56) at a pre-selectable distance from the vehicle (12).

21. A vehicle wash installation according to Claim 19 or 20 in conjunction with Claim 10, **characterised in that** the nozzle bank (56) is held height-adjustably on the two transporting devices (22, 24).

## Revendications

1. Installation de lavage de véhicules (10) comportant au moins une structure à buses (42), mobile longitudinalement et transversalement par rapport à un véhicule (12) à nettoyer, et qui peut être alimentée en liquide de nettoyage en vue de nettoyer ledit véhicule (12), **caractérisée en ce que** le la structure à buses (42) comporte au moins deux groupes de buses (62, 66, 70), dont un premier groupe de buses (62) est dirigé vers le véhicule (12) à nettoyer lors d'un déplacement transversal de la structure à buses (42), et un deuxième groupe de buses (60) est dirigé vers ledit véhicule lors d'un déplacement longitudinal de la structure à buses (42).

2. Installation de lavage de véhicules selon la revendication 1, **caractérisée en ce que** la structure à buses (42) comporte trois groupes de buses (62, 66, 70), dont un premier groupe de buses (62) est dirigé vers le véhicule (12) lors d'un déplacement transversal devant le véhicule (12) à nettoyer, un deuxième groupe de buses (66) est dirigé vers le véhicule (12) lors d'un déplacement longitudinal le long d'un côté longitudinal (68) dudit véhicule, et un troisième groupe de buses (70) est dirigé vers le véhicule (12) lors d'un déplacement transversal derrière le véhicule à nettoyer (12).

3. Installation de lavage de véhicules selon la revendication 1 ou 2, **caractérisée en ce que** la structure à buses (42) est mobile à une distance prédéterminée du véhicule (12).

4. Installation de lavage de véhicules selon l'une des revendications précédentes, **caractérisée en ce qu'**une unité de capteurs (38) est affectée à la structure à buses (42) en vue de commander la structure à buses (42) lors un déplacement longitudinal.

5. Installation de lavage de véhicules selon la revendication 4, **caractérisée en ce que** la structure à buses (42) et l'unité de capteurs (38) sont fixées à une unité de transport (32) mobile dans la direction transversale.

6. Installation de lavage de véhicules selon la revendication 5, **caractérisée en ce qu'**une unité d'entraînement (34), agencée sur l'unité de transport (32), est affectée à la structure à buses (42) en vue de déplacer ladite structure à buses (42).

7. Installation de lavage de véhicules selon l'une des revendications précédentes, **caractérisée en ce qu'**une structure à capteurs (82, 84) est affectée au dispositif à buses (42) en vue de détecter l'extrémité arrière (72) du véhicule (12).

8. Installation de lavage de véhicules selon la revendication 7, **caractérisée en ce que** la structure à capteurs (82, 84) comporte une barrière lumineuse inclinée par rapport à l'horizontale.

9. Installation de lavage de véhicules selon l'une des revendications précédentes, **caractérisée en ce qu'**un dispositif de transport (24) est affecté à la structure à buses (42) en vue de déplacer ladite structure à buses (42) dans la direction longitudinale.

10. Installation de lavage de véhicules selon l'une des revendications précédentes, **caractérisée en ce que** l'installation de lavage de véhicules (10) comporte un dispositif de transport (22, resp. 24) de chaque côté du véhicule (12), les deux dispositifs de transport (22, 24) étant mobiles de façon synchrone dans la direction longitudinale et étant reliés entre eux par une traverse (30), la structure à buses (42) étant montée sur ceux-ci de manière à pouvoir coulisser.

11. Installation de lavage de véhicules selon l'une des revendications précédentes, **caractérisée en ce que** l'installation de lavage de véhicules (10) comporte une autre structure à buses (44) qui est mobile le long du véhicule (12) et possède un groupe de buses (74) dirigé vers le véhicule (12).

12. Installation de lavage de véhicules selon l'une des revendications précédentes, **caractérisée en ce qu'**au moins une structure à buses (42, 44) est fixée à un bras de support de buses (40, resp. 46).

13. Installation de lavage de véhicules selon la revendication 12, **caractérisée en ce que** des moyens applicateurs supplémentaires (69, 73) sont fixés au moins à un bras de support de buses (40, 46) en vue d'appliquer de la mousse et/ou un produit chimique de nettoyage sur le véhicule (12) à nettoyer.

14. Installation de lavage de véhicules selon la revendication 13, **caractérisée en ce que**, sur au moins un bras de support de buses (40, 46), les moyens applicateurs comportent plusieurs buses d'aspersion orientées dans différentes directions.

15. Installation de lavage de véhicules selon l'une des revendications précédentes, **caractérisée en ce que** l'installation de lavage de véhicules (10) comporte une soufflerie destinée à sécher le véhicule (12) ainsi qu'un canal d'écoulement (91) ouvert en direction du véhicule, et **en ce qu'**une structure à buses (42, 44) est fixée au canal d'écoulement (91).

16. Installation de lavage de véhicules selon l'une des revendications précédentes, **caractérisée en ce qu'**au moins une région d'embouchure (89) du canal d'écoulement (91) est mobile à une distance prédéterminée du véhicule (12).

17. Installation de lavage de véhicules selon la revendication 16, **caractérisée en ce que** le canal d'écoulement (91) est fixé à une unité de transport (32) mobile dans la direction transversale.

18. Installation de lavage de véhicules selon la revendication 17, **caractérisée en ce que** la soufflerie est fixée à l'unité de transport (32).

19. Installation de lavage de véhicules selon l'une des revendications précédentes, **caractérisée en ce que** l'installation de lavage de véhicules (10) comporte une poutre pour buses (56), qui est réglable en hauteur et orientée transversalement au véhicule (12).

20. Installation de lavage de véhicules selon la revendication 19, **caractérisée en ce qu'**une structure à capteurs est affectée à la poutre pour buses (56) en vue de déplacer la poutre pour buses (56) à une distance prédéterminée du véhicule (12).

21. Installation de lavage de véhicules selon la revendication 19 ou 20 en liaison avec la revendication 10, **caractérisée en ce que** la poutre pour buses (56) est fixée de façon réglable en hauteur des deux côtés du dispositif de transport (22, 24).
